# EUROPEAN PATENT APPLICATION

(11) **EP 3 670 017 A1**
(43) Date of publication of application: **24.06.2020**
(21) Application number: 18846457.2
(22) Date of filing: 08.08.2018
(51) Int. Cl.: B21D 19/04, B21D 39/02, B21D 43/00, B25J 9/06

(54) **DIE, ROLLER HEMMING PROCESSING SYSTEM, AND METHOD FOR PERFORMING ROLLER HEMMING PROCESS ON METAL WORKPIECE**

(30) Priority: 17.08.2017 JP 2017157517
(71) Applicant: SHINKOH CO., LTD., Okusa, Komaki-city Aichi 485-0802 (JP)
(72) Inventor: MIURA, Takahisa, Kasgai-shi Aichi, 486-0846 (JP)
(74) Representative: Maikowski & Ninnemann Patentanwälte Partnerschaft mbB
(86) International application number: PCT/JP2018/029787
(87) International publication number: WO 2019/035403

(57) **Abstract**

A die (10) includes a plastic positioning body (11) configured to position a door outer panel (90) to be set in a predetermined posture by being abutted along an edge of an edge (91) of the door outer panel (90). This positioning body (11) includes a metal inset (or metal inserts) (12) having a higher surface hardness than the plastic at application portion (or portions) where force is applied from areas when these areas, in which deformation resistance at the door outer panel (90) is locally increased, are bent back. The metal insert(s) (12) is in a half-embedded state in which one part of the metal insert(s) (12) is exposed from a surface of the application portion while the remaining part is embedded inside the application portion.

## Description

### Technical Field

The present disclosure relates to a die in which a sheet-like metal workpiece is set, a roller hemming system using this die, and a method for performing a roller hemming process on the metal workpiece.

### Background Art

Conventionally, when processing a sheet-like metal workpiece, an edge thereof may be bent back by a press bending process for the purpose of joining the edge of this metal workpiece with another member or for the purpose of reinforcing the edge of the metal workpiece. A process method of pressing and bending back the edge of the metal workpiece by a roller provided on a multi-articulated robot is well known for this press bending process (in this specification, this process method is referred to as "roller hemming").

A technique disclosed, for example, in the following registered Utility-Model publication No. 2581610 is known as a technique for the press bending process. In this technique, a plastic press member is interposed between metal sheets to form a die for the press bending process. By including an interposed plastic press member, the weight of the die is reduced, so as to be suitable for being attached to a robot arm. However, in the above technique, the metal parts cannot be eliminated from the die since they are needed to ensure the strength and accuracy necessary for the press bending process.

### Summary of the Invention

According to the conventional technique disclosed in the above described registered Utility Model publication No. 2581610, the die must include both metal sheets on opposite sides binding the plastic press member. However, the processing load is typically applied only on one predetermined side of the die during the press bending process. The load applied on the other side is negligibly small. Specifically, with regard to the above conventional technique, it is necessary to include metal parts on the die where substantially no load is applied during the press bending process, therefore, the weight of the die tends to be increased correspondingly.

According to one aspect of the present disclosure, a die, with a metal workpiece set therein, is provided such that a roller hemming process can be performed on an edge of the sheet-like metal workpiece in an area where a deformation resistance against bending back is locally enhanced. Here, roller hemming is a process in which the edge of the metal workpiece is pressed with a roller so as to be bent back. The die includes a plastic positioning body configured to position the metal workpiece to be set in a predetermined posture by being abutted along the edge of the metal workpiece. This positioning body includes a metal inset (or metal inserts) having a higher surface hardness than the plastic at application portion (or portions) where force is applied from the area when the area of the metal workpiece are bent back. The metal insert(s) is in a half-embedded state in which one part of the metal insert(s) is exposed from a surface of the application portion while the remaining portions is embedded inside the application portion.

With the die of the present disclosure, the surface hardness of the positioning body is increased by the metal insert exposed from the surface of the application portion at the application portion. This portion is where a greater force is applied from the areas where the deformation resistance is locally enhanced at the edge thereof. The greater the wear resistance of an object, the greater the surface hardness. Therefore, with the die of the present disclosure, local wear at the application portion may be reduced, even when a greater pressing force is applied as compared to the other parts of the edge when the above-mentioned areas are being bent back. This makes it possible to reduce uneven wear of the positioning body of the die and to extend the life of this die. Further, since the die of the present disclosure is configured to be provided with the metal inserts embedded in the application portions, where the force is applied from the areas where the metal workpiece is bent back, it is not necessary to provide metal inserts to other portions where the force from the metal workpiece is not applied. Therefore, the weight of the die can be reduced.

Further, in addition to increasing surface hardness, a known method of enhancing the wear resistance of an object includes reducing the friction coefficient of the surface of the object. Here, since the adopted method is increasing the surface hardness of the positioning body as a method of making the positioning body hard to wear out, it is not necessary to reduce the frictional coefficient of the surface of the positioning body. Therefore, it is possible to reduce the potential displacement of the metal workpiece due to slipping on the positioning body.

According to one preferable embodiment of the die, the positioning body serves to determine a position of the metal workpiece, the metal workpiece having a plate thickness of more than or equal to 0.5mm and less than or equal to 1mm at its edge. Further, the application portion(s) is configured to extend along the edge of the metal workpiece, the metal workpiece having a width of less than or equal to 7mm at a bent-back portion by roller hemming.

In the present disclosure, when the sheet-like metal workpiece has a plate thickness of more than or equal to 0.5mm and less than or equal to 1mm at its edge, a portion of the metal workpiece will likely have a greater deformation resistance during a roller hemming process merely depending on the width of the bent-back portion, regardless of the constituent material of this metal workpiece. Accordingly, it is possible to determine an arrangement of the metal inserts in the positioning body of the die merely by the appearance of the metal workpiece. Therefore, modifying the design can be easily carried out when changing the design of the metal workpiece, without repeating trial and error to determine the arrangement of the metal inserts.

Further, the positioning body may preferably be configured by assembling a plurality of plastic blocks, made of a hard urethane resin without voids, with the metal insert(s).

The positioning body along the metal workpiece during the roller hemming process are required to have the property of being hard to crack or chip (i.e., having toughness) in addition to the wear resistance. For example, a hard urethane resin is known as a plastic having excellent wear resistance and toughness. When casting a hard urethane resin, voids may be formed that often lead to cracks. Accordingly, a high level of technique is necessary to prevent formation of the voids in a casted product if the casted product has a relatively complex shape (for example, a shape in which an insert or inserts is embedded).

Here, according to the above structure, it is possible to produce a positioning body having a relatively complex shape out of plastic blocks having a relatively simple shape. Therefore, when producing the positioning body using a hard urethane resin, a high level of technique is not necessary to prevent formation of the voids in the casted product made of hard urethane resin having a relatively complex shape.

According to one of the alternative preferred embodiments, a positioning body serves to determine a position of a metal workpiece with a corner (or corners) having a trimmed edge shape. Further, the application portion(s) is configured to be placed along a portion (or application portions) at the edge of the metal workpiece made to have a narrower bent-back width, due to being trimmed, after roller hemming.

When roller hemming the metal workpiece having the corners, the edges at the corners may be formed with a pre-trimmed shape in order to avoid the bent-back edge at the corners of the metal workpiece from being deformed in a shape with creases . Further, it is empirically known that the deformation resistance at this edge during a roller hemming process on the metal workpiece becomes greater as the bent-back width of the edge becomes narrower. Here, according to the above constitution, an arrangement of the metal inserts in the positioning body of the die may be determined in accordance with a configuration of the portion of the metal workpiece having a trimmed shape. Therefore, design modification can be easily carried out when changing the design of the metal workpiece, without needing trial and error to determine the arrangement of the metal inserts.

According to one of the preferred embodiments which are different from any one of each of the above embodiments, the positioning body serves to determine the position of a metal workpiece having a trapezoidal groove at the edge. The trapezoidal groove may be in a shape where a part of the edge is notched. The application portion(s) is configured to be placed along a portion of the edge of the metal workpiece during roller hemming, the portion having a narrower bent-back width due to the trapezoidal groove.

When processing a sheet-like metal workpiece, a bending line may be formed on a sheet surface of the metal workpiece by bending the entire metal workpiece prior to bending the edge of the metal workpiece back by the roller hemming. In this case, the edge around the bending line may be formed in advance in a shape having a trapezoidal groove as a notch. This helps to prevent the edge of the metal workpiece subjected to roller hemming from becoming deformed in a shape with creases. Further, it is empirically known that the deformation resistance at this edge increases during the roller hemming process on the metal workpiece when the bent-back width at the edge becomes narrower. Here, according to the above constitution, the arrangement of the metal inserts in the positioning body of the die may be determined in accordance with a configuration of the portion provided with the trapezoidal grooves in the metal workpiece. Therefore, design modification can be easily carried out when changing the design of the metal workpiece, without needing trial and error to determine the arrangement of the metal inserts.

Further, a method for performing a roller hemming process is also disclosed. The disclosed process is one in which the roller hemming process is carried out on a sheet-like metal workpiece having areas at the edge where deformation resistance against bending back is locally increased. The bending back may be performed by pressing and bending back the edge of this metal workpiece with a roller. This roller hemming system includes a die in which a metal workpiece can be set, such that the roller hemming can be carried out. Further, the roller hemming system includes a supporting means configured to support the metal workpiece in a state with the edge of this metal workpiece being freely accessible. Furthermore, the roller hemming system includes a robot having the roller and is configured to control pressing the edge of the metal workpiece with this roller. The die includes a plastic positioning body configured to position the metal workpiece to be set in a predetermined posture by being abutted to and along an edge of the metal workpiece. This positioning body includes a metal inset (or metal inserts) having a higher surface hardness than the plastic at an application portion (or application portions), where the force is applied from the areas when the above-mentioned areas of the metal workpiece are bent back. The metal insert(s) is half-embedded, in which some part of the metal insert(s) is exposed from a surface of the application portion(s) while the remaining part is embedded inside the application portion(s). The robot serves to press the edge at the metal workpiece with the roller from a side opposite to the positioning body while the metal insert(s) is set in the die and placed along the above-mentioned areas.

With the roller hemming system according to the present disclosure, it is possible to carry out the roller hemming process on the metal workpiece using a die according to the above-mentioned present disclosure.

According to one of the preferred embodiments of the roller hemming system, the roller hemming system includes a manipulator for controlling the position and the posture of the die. Further, the supporting means serves to bring this metal workpiece into a lifted state by supporting the metal workpiece. Further, the manipulator allows the positioning body of the die to cover the metal workpiece supported by the supporting means. The metal insert(s) is positioned along the above-described areas of this metal workpiece, so that the metal workpiece is set in the die.

According to the above constitution, the roller hemming process can be carried out on the metal workpiece using the die according to the above-described present disclosure. The roller hemming process is carried out while the metal workpiece is being supported by the supporting means, the supporting means being different from the die. In this way, it is possible to reduce the weight of the die itself. Therefore, since the die does not require a supporting structure for supporting the metal workpiece, the handling performance of the manipulator for controlling the position and the posture of the die can be improved. Therefore, a roller hemming system can be provided in which the operability of arrangement changing work by operating the manipulator for the die is improved.

Also disclosed is a method for performing the roller hemming process on the metal workpiece in which the roller hemming process is carried out on the sheet-like metal workpiece having areas at the edge where deformation resistance against bending back is locally increased. The roller hemming process may be carried out by pressing and bending back the edge of this metal workpiece with a roller. In this method for performing the roller hemming process on this metal workpiece, a die including a later described plastic positioning body and a metal insert (or metal inserts) is used. Here, the plastic positioning body serves to dictate the position of the metal workpiece to be set to take the predetermined posture. The positioning body may be abutted along an edge of the metal workpiece. Further, the metal insert(s) may be half-embedded into the positioning body such that some part of the metal insert(s) is exposed from a surface of the positioning body while the remaining portion is embedded in the positioning body. In the above method for performing the roller hemming process on a metal workpiece, the metal workpiece is set in the die such that the metal insert(s) of the die is placed along the area of this metal workpiece. With the metal workpiece being set in the die, the edge of the metal workpiece is pressed by the roller from the side opposite to the positioning body.

In the method for performing the roller hemming process on the metal workpiece according to the present disclosure, the roller hemming process can be performed on the metal workpiece using the die according to the above-described present disclosure.

In the method for performing the roller hemming process on the metal workpiece, it is favorable for the die to cover the metal workpiece being supported by the supporting means in a lifted state with a supporting means independent of the die. The die may be positioned to place the metal insert(s) along the above-described area of the metal workpiece when the metal workpiece is set in the die.

According to the above method, a roller hemming process can be performed on the metal workpiece using the die according to the above-described present disclosure. The roller hemming process can be performed while the metal workpiece is supported by the supporting means, which is different from the die. In this way, it is possible to reduce the weight of the die itself. Since it is not needed to provide a structure for supporting the metal workpiece on the die, the handling performance of the die can be improved. Therefore, it is possible to achieve a method for performing a roller hemming process on the metal workpiece with improved operability of an arrangement changing work of the die.

### Brief Description of Drawings

FIG. 1 is a front view showing a roller hemming system 20 according to one embodiment of the present disclosure.
FIG. 2 is a left side view showing the roller hemming system 20 of FIG. 1.
FIG. 3 is a plan view showing the roller hemming system 20 of FIG. 1.
FIG. 4 is a perspective view showing an operation state of the roller hemming system 20.
FIG. 5 is a perspective view showing a door inner panel 90A and a door outer panel 90 processed by the roller hemming system 20.
FIG. 6 is a front view showing a die 10 of FIG. 1.
FIG. 7 is a left side view showing the die 10 of FIG. 1.
FIG. 8 is a plan view showing the die 10 of FIG. 1.
FIG. 9 is an exploded perspective view of a positioning body 11 of FIG. 8.
FIG. 10 is an explanatory view illustrating a state in which a door outer panel 90 of FIG. 5 is set in the die 10 of FIG. 4.
FIG. 11 is an enlarged view of section A of FIG. 10.
FIG. 12 is an enlarged view of section B of FIG. 10.
FIG. 13 is an explanatory view illustrating a motion of a vertical multi-articulated robot 23B of FIG. 4.
FIG. 14 is an explanatory view illustrating the motion of the vertical multi-articulated robot 23B of FIG. 4.
FIG. 15 is an explanatory view illustrating a method for performing a roller hemming process on the door outer panel 90 using a fixture 20A of FIG. 2

### Embodiments for carrying out the Invention

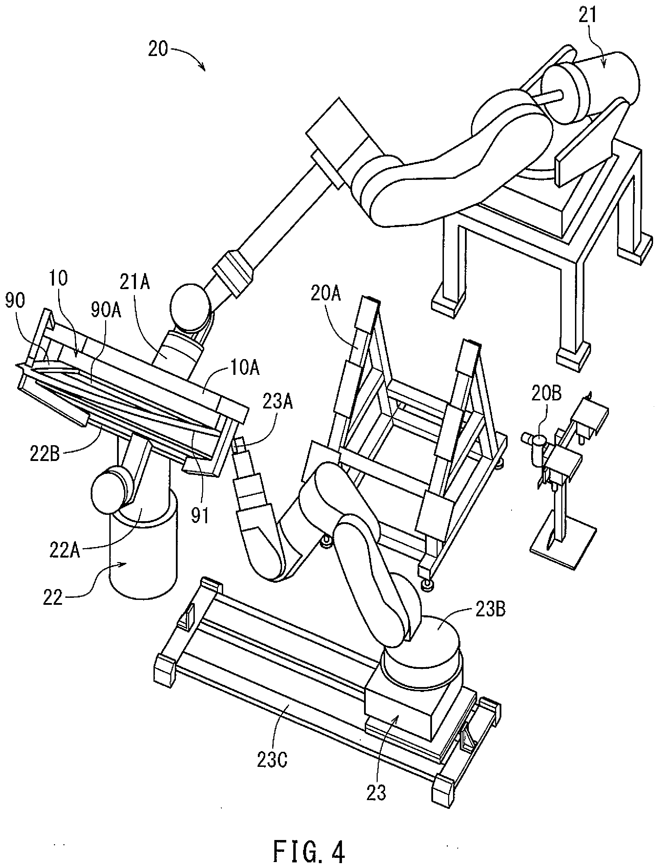

Hereinafter, a roller hemming system 20 according to one embodiment for carrying out the present disclosure will be described with reference to the drawings. This roller hemming system 20 serves to perform a roller hemming process on a door outer panel 90 as a sheet-like metal workpiece, such that an edge 91 is bent back as illustrated in FIG. 4.

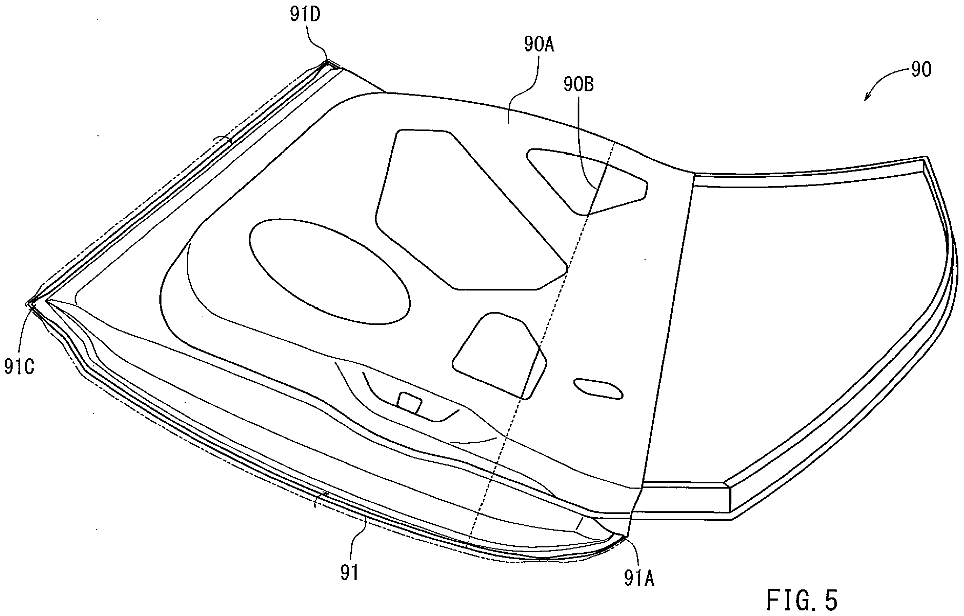

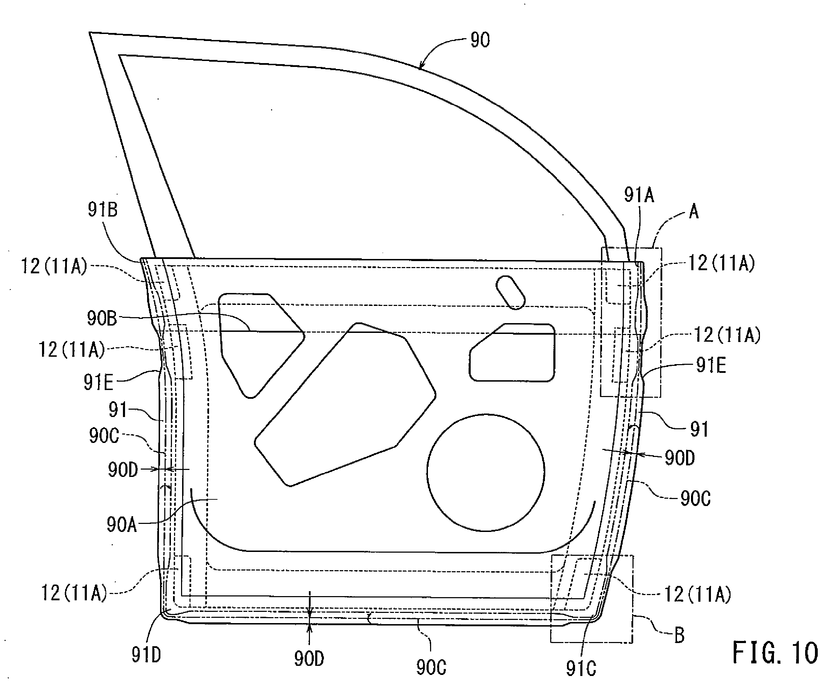

This door outer panel 90 may be formed by processing a metal sheet (specifically, for example, a cold-rolled steel sheet or an aluminum sheet) with a press machine. As shown in FIG. 5 and FIG. 10, the door outer panel 90 may be shaped to form an outer shell of a front door and door sash of a passenger automobile. In the present embodiment, the door outer panel 90 is formed to have a sheet thickness of greater than or equal to 0.5mm and less than or equal to 1mm at its edge 91.

Further, a linear bending line 90B may be formed on the door outer panel 90 by bending an entire part of an outer shell of the door outer panel 90 to form a raising (e.g., raising toward a back side of the sheet as viewed in FIG. 10) on an outer side of the outer shell. This bending line 90B may be formed to extend from the edge 91 of the front side of the outer shell (e.g., right side as viewed in FIG. 10) to the edge 91 of the rear side of the outer shell (e.g., left side as viewed in FIG. 10) in the front to rear direction of the outer shell (e.g., left-right direction as viewed in FIG. 10).

Further, a door inner panel 90A may be formed by processing a rectangular metal sheet with a press machine. The door inner panel 90A may be shaped to form a door rim of the front door for a passenger automobile. The door inner panel 90A may be overlaid on the part of the door outer panel 90 constituting the outer shell. The door inner panel 90A and the door outer panel 90 generally define an outer contour of the front door of the passenger automobile as a whole. The door outer panel 90 may be integrally formed with the door inner panel 90A by bending back its edge 91 along the edge of the door inner panel 90A by roller hemming.

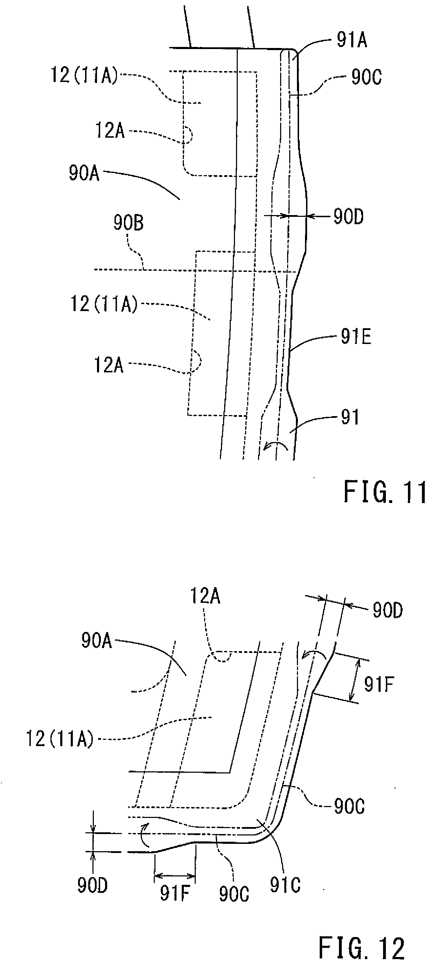

Here, as shown in FIG. 10, corners 91A, 91B, 91C, 91D of the edges 91 of the door outer panel 90 may be positioned close to each of the corresponding four corners of the door inner panel 90A. The corners 91A, 91B, 91C, 91D may be beveled so as to form a shaped corner. In the present embodiment, the corners 91A, 91B positioned at the parts defining the upper edge of the outer shell are formed to have a beveled ogee (Hyoutan) profile. The corners 91C, 91D positioned in the part defining the lower edge of the outer shell are formed to have a compound beveled shape in which corners of both sides of an ovolo (Karato) profile are cut off by wide trimming. In the present embodiment, the wide beveled portions of the compound beveled shape may be formed such that the length 91F (see FIG. 12) will be, for example, 20mm.

Further, a trapezoidal groove 91E may be positioned at a portion where the bending line 90B extends from the edge 91 of the door outer panel 90. The trapezoidal groove 91E may be formed by notching a part of the edge 91 in the thickness direction (e.g., in a direction from the front side to the back side of the sheet of FIG. 10). This trapezoidal groove 91E may prevent the edge 91 from being deformed in a shape creased at the edge 91 during the bending process for forming the bending line 90B at the edge 91 of the door outer panel 90.

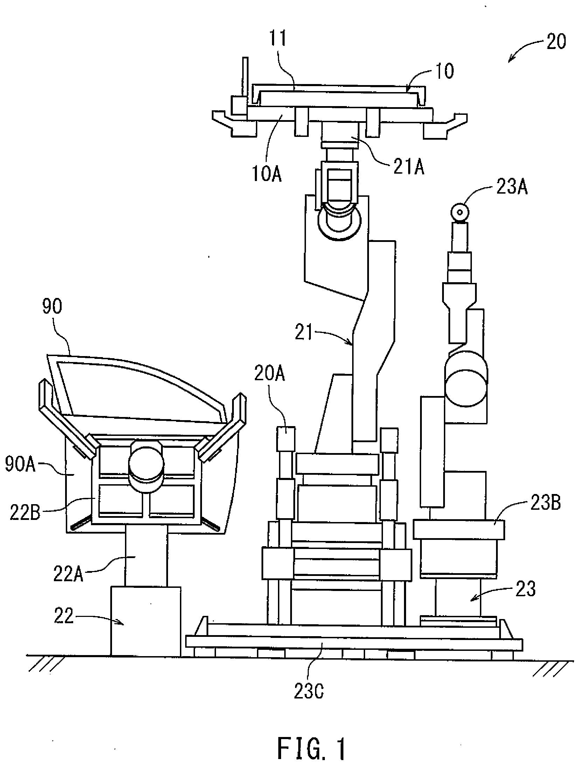

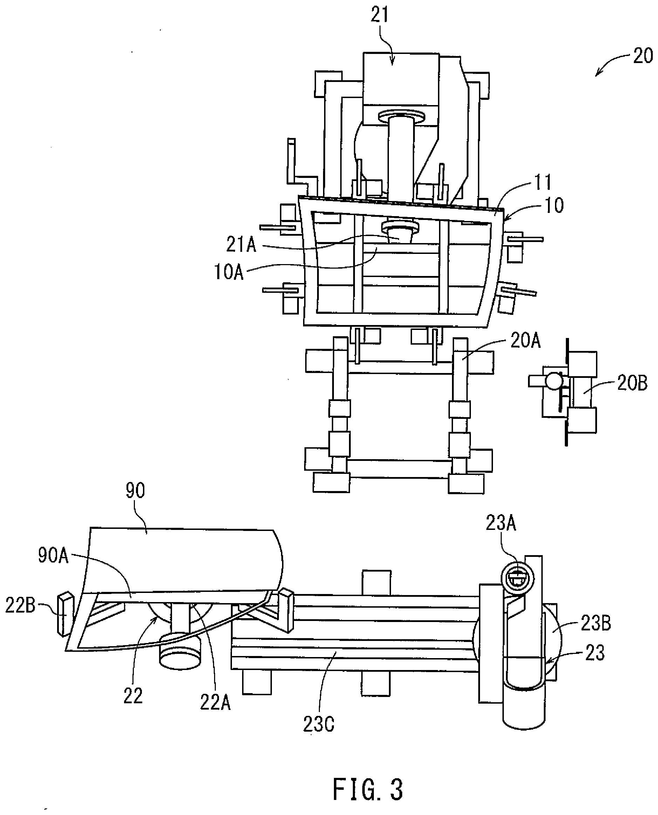

The roller hemming system 20 includes a linear rail 23C and a carriage on track 23. The carriage 23 may be a robot reciprocally moveable on the rail 23C, as shown in FIGS. 1 to 4. This carriage on track 23 may include a 6-shaft vertical multi-articulated robot 23B with a roller 23A at the front end thereof.

Further, the roller hemming system 20 may include a jig 22. The jig 22may serve as a supporting means capable of supporting the door outer panel 90 overlaid on the door inner panel 90A in a lifted-up state. This jig 22 is structured to have a fixture 22B attached on a manually operable turn table 22A so that the door inner panel 90A can be horizontally turned together with the door outer panel 90, while the door outer panel 90 is leaning against this fixture 22B.

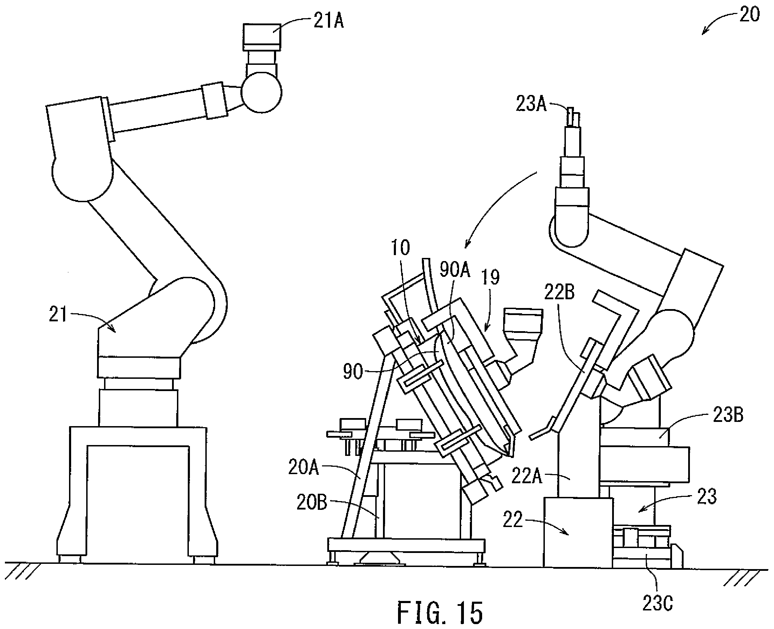

Further, the roller hemming system 20 may include a die 10. The door outer panel 90 is set within the die 10 when performing a roller hemming process, as shown in FIG. 4. Further, the roller hemming system 20 may include a 6-shaft vertical multi-articulated robot 21 with a hand 21A at the front end thereof. This vertical multi-articulated robot 21 is configured to serve as a manipulator for controlling the position and the posture of the die 10by grasping the die 10 with its hand 21A and lifting the die 10. In the present embodiment, the vertical multi-articulated robot 21 is made to also be able to grasp and handle an object (for example, a pressing member 19 shown in FIG. 15) other than the die 10 with the hand 21A.

Further, the roller hemming system 20 may include a fixture 20A allowing the die 10 to be placed in a state leaning in one predetermined direction, as shown in FIG. 15. This fixture 20 may be installed between the rail 23C and the vertical multi-articulated robot 21, in such an orientation that the die 10 can be leaned in a direction from the side of the rail 23C (e.g., leaned from the right side as viewed in FIG. 15).

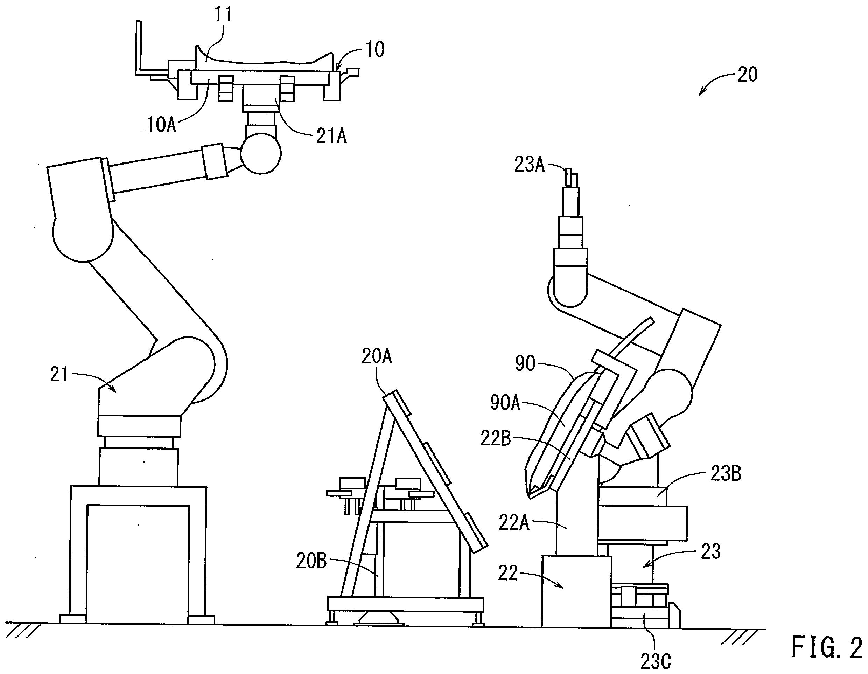

Further, the roller hemming system 20 may include a control unit 20B, as shown in FIGS. 2 to 4. This control unit 20B is an apparatus for collectively controlling the motion of the movable parts of each component of the above-described roller hemming system 20.

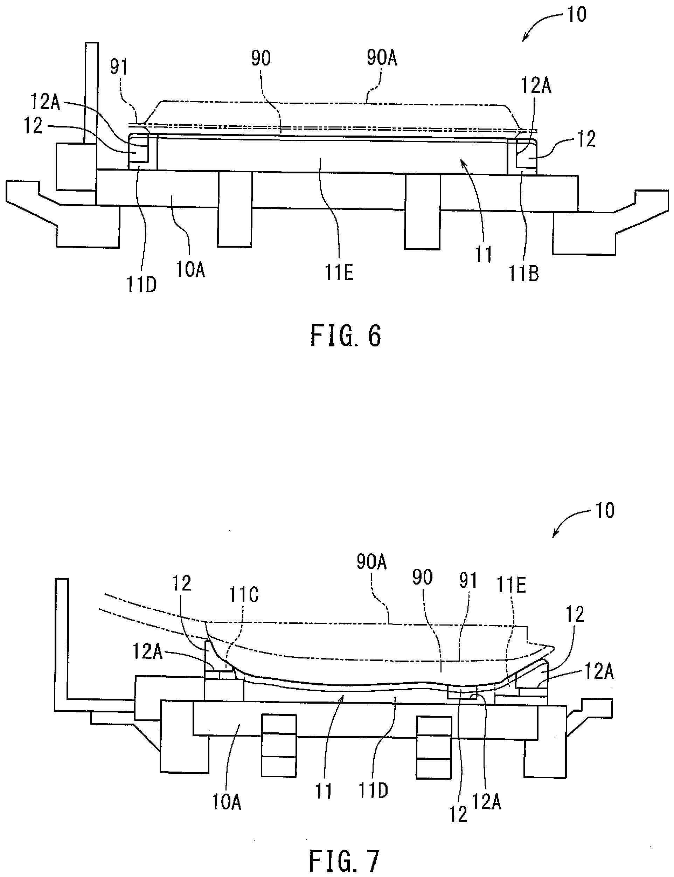

The die 10 may include a handle 10A structured to enable the hand 21A of the vertical multi-articulated robot 21 to grasp the die 10. Further, the die 10 may include a positioning body 11 configured to form a torus body which can come in contact with the edge 91 along the edge 91 of the door outer panel 90, as shown in FIGS. 6 to 8. In the present embodiment, the handle 10A is configured to form a frame with parallel crosses, so as to allow the positioning body 11 to be fitted therein.

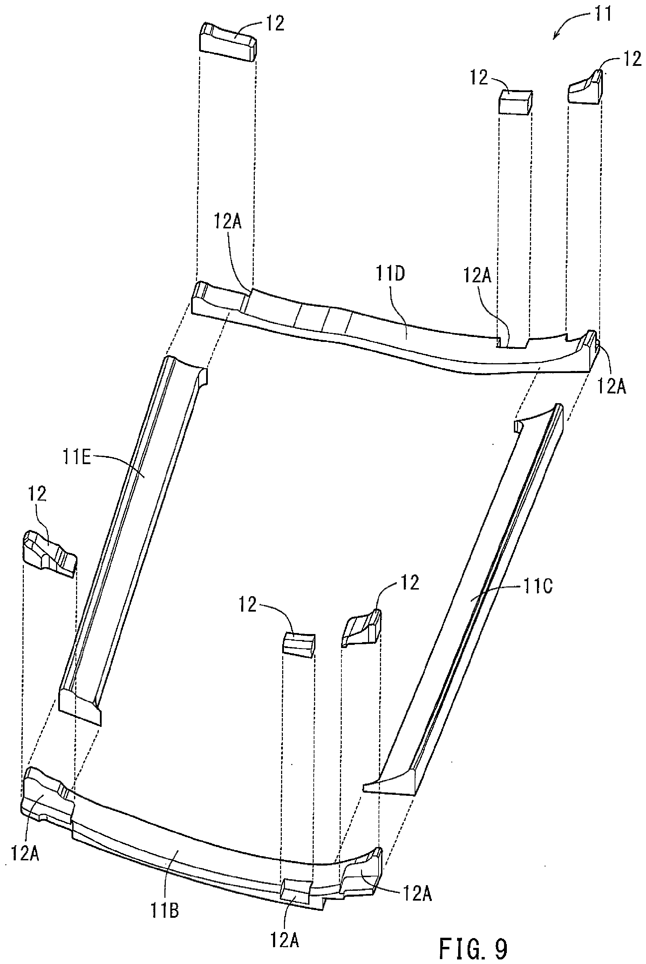

As shown in FIG. 9, the positioning body 11 may be structured by assembling four plastic blocks 11B, 11C, 11D, 11E together with six metal inserts 12. The plastic blocks 11B, 11C, 11D, 11E may be formed in generally a rod shape, and the six metal inserts 12 may be formed in generally a block. The four plastic blocks 11B, 11C, 11D, 11E may be made by cutting out a plastic block without voids. The four plastic blocks 11B, 11C, 11D, 11E may each generally have a rod shape, which is a relatively simple shape. A hard urethane resin block excellent in both wear resistance and toughness may be favorably used for these plastic blocks. The shore D value of this hard urethane resin is preferably greater than or equal to 80, and more preferably greater than or equal to 80 and less than or equal to 90. These surface hardness values are represented as a shore D value, which is the hardness according to a Durometer D test specified in ISO 868: 2003. RAKU-TOOL ® WB-1250, RAKU-TOOL® CB-6503, or RAKU-TOOL® WB-1210 (RAKU-TOOL is a registered trademark for hard resins manufactured by Rampf Holding GmbH & Co. KG) are examples of such urethane resins. If the surface hardness of the hard urethane resin is less than 80, the plastic blocks 11B, 11C, 11D, 11E may become severely worn or deteriorated. This may result in the plastic blocks 11B, 11C, 11D, 11E becoming deformed or damaged relatively early.

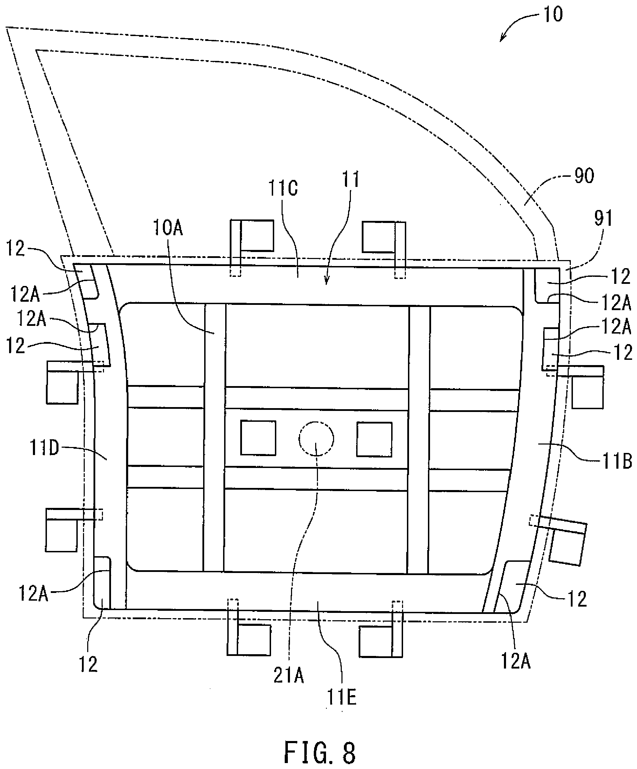

The plastic blocks 11B, 11C, 11D, 11E may be joined by butt joints and bonded together with an adhesive, such that each block can be placed along a front edge, an upper edge, a rear edge, and a lower edge of the edges 91 of the door outer panel 90 (see FIG. 8). Three recesses 12A may be formed in the plastic blocks 11B, 11D having exposed end faces at these butt joints. One metal insert 12 is inserted in each of these recesses 12A. Here, each of the metal inserts 12 is located so as to be placed along the corners 91A, 91B, 91C, 91D or the trapezoidal groove 91E of this edge 91, when the positioning body 11 is abutted along the edge 91 of the door outer panel 90 (see FIG. 10).

The six metal inserts 12 may be made by cutting sintered carbon steel into blocks. The sintered carbon steel may be a metal having a greater surface hardness than that of each of the above mentioned hard urethane resins. When the sintered carbon steel surface hardness is represented as an HRC, which is the hardness value of a Rockwell hardness test for scale C specified in ISO 6508-1:2016, the HRC value of this sintered carbon steel is preferably greater than or equal to 60, more preferably greater than or equal to 60 and less than or equal to 65. Examples of such sintered carbon steel may be S50C Carbon Steel for Mechanical Structural Use or SX105V (product name) manufactured by Aichi Steel Corporation. When the surface hardness of the sintered carbon steel is less than 60, a deformation problem of the metal insert 12 may occur relatively early.

The metal inserts 12 are fitted in the plastic blocks 11B, 11D by a flat-inlay process in the plastic blocks 11B, 11D, with the plastic blocks 11B, 11D functioning as base members. Here, the term "flat-inlay" refers to as a technique in which the metal inserts are fitted into the recesses (e.g., the recesses 12A of FIG. 9) of a base member and subsequently have their surfaces shaped by using a grinder, so as to be flush with the base member. Therefore, the metal inserts 12 fitted in the plastic block 11B are brought into a half-embedded state in which some parts of these metal inserts 12 are exposed from the surface of the plastic block 11B while the remaining parts are embedded inside the plastic block 11B. Further, the metal inserts 12 fitted in the other plastic block 11D are brought into a half-embedded state, in which some parts of this metal inserts 12 are exposed from the surface of the plastic block 11D while the remaining parts are embedded inside the plastic block 11D.

Next, an operation of performing a roller hemming process on a door outer panel 90 by an operator (not shown) using the roller hemming system 20 having each of the above-described constitution will be described. Firstly in this operation, the operator horizontally rotates the turn table 22A of the jig 22 so as to orient the fixture 22B on this turn table 22A toward the front side of the operator. Subsequently, the operator leans the door inner panel 90A against the fixture 22B. Then, the door outer panel 90 is overlaid on the door inner panel 90A, such that the door outer panel 90 is supported by the fixture 22B of the jig 22. At this time, the operator leans the door outer panel 90 against the fixture 22B from the side of the inner door panel 90A so that the edge 91 of the door outer panel 90 is brought into a state so as to be suspended by the fixture 22B and be freely accessible.

Next, the operator horizontally rotates the turn table 22A of the jig 22 so as to orient the fixture 22B on this turn table 22A as well as the door outer panel 90 supported by this fixture 22B, toward the side of the vertical multi-articulated robot 21 (toward the left side as viewed in FIG. 2). Subsequently, the operator starts the roller hemming system 20.

With the roller hemming system 20 started, the vertical multi-articulated robot 21 is moved first such that the die 10 grasped by the hand 21A of this vertical multi-articulated robot 21 is covered on the door outer panel 90. At this time, the vertical multi-articulated robot 21 allows the die 10 to cover the door outer panel 90 from the side of the positioning body 11 so that the positioning body 11 is placed along the edge 91 of the door outer panel 90.

The positioning body 11 positions the correct posture of the door outer panel 90 while the edge 91 is opened by being abutted to a part of the plate surface of the door outer panel 90 radially inward of the edge 91. As a result, the die 10 is set on the door outer panel 90 such that roller hemming can be performed. In this state, each of the metal inserts 12 is positioned so as to be placed along the edge 91 of the door outer panel at the corner 91A, 91B, 91C, 91D or the trapezoidal groove 91E (see FIG. 8).

Furthermore, the roller hemming system 20 allows the carriage on track 23 to move on the rail 23C and determines the position of this carriage on track 23 in a predetermined processing position. This processing position is set such that the roller 23A on the vertical multi-articulated robot 23B can reach any part of the edge 91 of the door outer panel 90, while being positioned by the die 10.

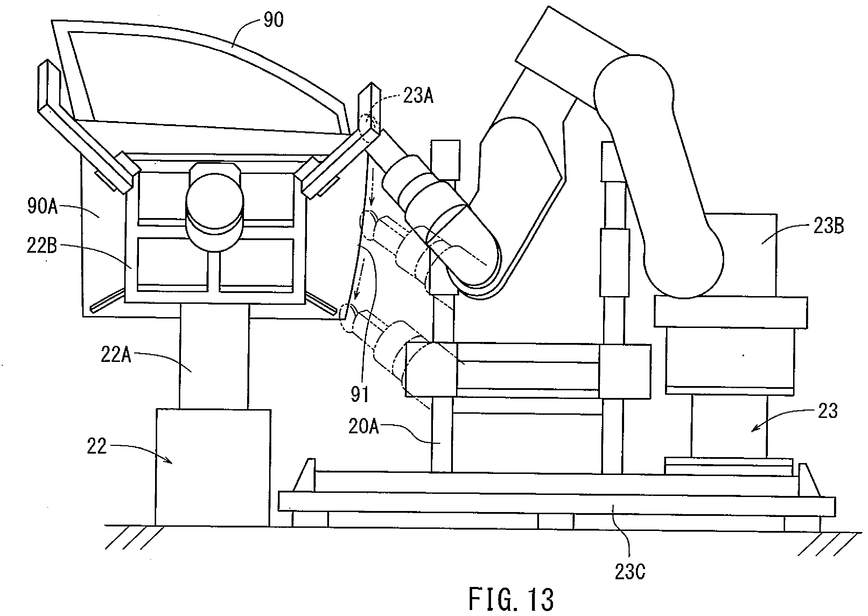

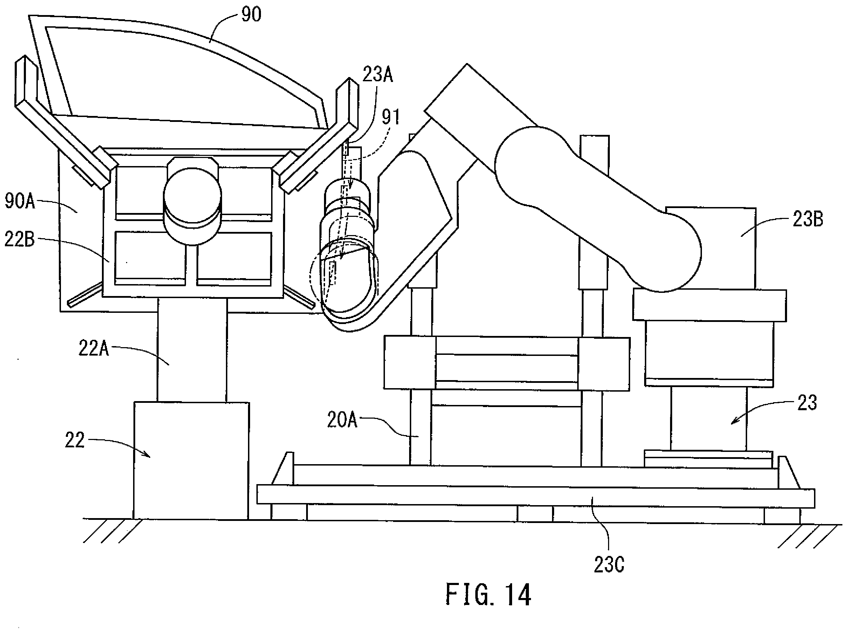

Moreover, the roller hemming system 20 moves the vertical multi-articulated robot 23B on the carriage on track 23 so that the roller 23A presses the edge 91 of the door outer panel 90. At this time, as shown in FIG. 13 and FIG. 14, the roller 23A is controlled by the vertical multi-articulated robot 23B on the carriage on track 23 so that it presses each side of the edge 91 twice. The edge 91 is pressed from the side opposite the positioning body 11 (see FIG. 8).

Here, the first pressing operation by the roller 23A is carried out such that the edge 91 is bent along the bending line 90C. The bending line 90C is virtually determined to correspond to be along a rim of the positioning body 11. The edge 91 of the door outer panel 90 is deformed so that it forms a flange like shape extending generally upward. Further, the second pressing by the roller 23A is carried out such that the edge 91 formed in the flange like shape is bent back toward an edge of the door inner panel 90A. The edge 91 is further crushed toward the edge of the door inner panel 90A. In this way, the roller hemming system 20 integrally forms the edge 91 of the door outer panel 90 with the edge of the door inner panel 90A by the roller hemming process (see FIG. 5).

As shown in either of FIGS. 10 to 12, the bending line 90C formed at the edge 91 of the door outer panel 90 may be configured to have a shape corresponding to the shape of the edge of the door inner panel 90A along this edge. Therefore, some parts of the edge 91 of the door outer panel 90 defining the corners 91A, 91B, 91C, 91D, are formed to have a reduced bent-back width 90D for the roller hemming process as a result of their trimmed shape. These portions are areas where the deformation resistance against bending back is locally increased. Further, a part of the edge 91 of the door outer panel 90 defining the trapezoidal groove 91E is formed to have a reduced bent-back width 90D for the roller hemming process because of this trapezoidal groove 91E and defines an area where the deformation resistance against bending back is locally increased.

In the present embodiment, the bent-back width 90D for the roller hemming process at some parts of the edge 91 of the door outer panel 90, those defining the corners 91A, 91B, 91C, 91D or the trapezoidal groove 91E, is determined to be less than or equal to 7mm. In particular, the bent-back width 90D for the roller hemming process at some parts excluding both sides of the compound trim at each of the corners 91A, 91B, 91C, 91D and at a bottom part of the trapezoidal groove 91E, are set to be more than or equal to 3mm and less than or equal to 4mm. Further, some parts of the edge 91 of the door outer panel 90 excluding the corners 91A, 91B, 91C, 91D or the trapezoidal groove 91E are determined to have the bent-back width 90D for the roller hemming process of greater than 7mm and less than 13mm.

Therefore, some parts of the positioning body 11 of the die 10 in which the door outer panel 90 is set, where placed along the corners 91A, 91B, 91C, 91D or the trapezoidal groove 91E serve as application portions 11A where the force is applied from the above-mentioned areas during the roller hemming process is performed on the door outer panel 90. Because these application portions 11A have configuration with the metal inserts 12 respectively arranged therein, the pressing force exerted when bending back these areas is received by the metal inserts 12.

After completion of pressing of the edge 91 of the door outer panel 90 with the roller 23A, the roller hemming system 20 restores the positions and postures of the vertical multi-articulated robot 21 and the carriage on track 23 to their condition immediately after starting the roller hemming system 20. As a result, the door outer panel 90 is released from a state of being set in the die 10, so that it can be freely removed from the fixture 22B.

Next, when the operator confirms that the door outer panel 90 is released from the die 10, the turn table 22A of the jig 22 is horizontally turned so that the fixture 22B on this turn table 22A is oriented to the front side of the operator. Subsequently, the operator removes the door outer panel 90, which is integrated with the door inner panel 90A as a result of the roller hemming process, from the fixture 22B. Then, the operator stops the roller hemming system 20. However, the operator may perform the roller hemming process on a plurality of door outer panels 90 by repeating the above-described operations.

In the operation for performing the roller hemming process, the roller hemming system 20 performs the roller hemming process on the door outer panel 90 leaned against the fixture 22B of the jig 22. However, the operator may also set the door outer panel 90 in the die 10 with the fixture 20A of the roller hemming system 20 as a supporting means for the die 10 to perform the roller hemming process on this door outer panel 90. Hereinafter, a method for performing this roller hemming process will be described.

When performing this roller hemming process, the operator operates a control unit 20B in advance and changes the operations of each the components of the roller hemming system 20. Further, the operator prepares a pressing member 19 in advance. The pressing member 19 is set such that the door outer panel 90 may be pushed into the die 10 by pressing on the door outer panel 90. This pressing member 19 is prepared in a predetermined location (not shown) so as to be within reach of the hand 21A of the vertical multi-articulated robot 21.

With the door inner panel 90A being laid over the door outer panel 90 ready at hand, the operator starts the roller hemming system 20. Subsequently, the roller hemming system 20 moves the vertical multi-articulated robot 21 to allow the die 10 being held by the hand 21A of this vertical multi-articulated robot 21 to be placed on and leaned against the fixture 20A from the side of the handle 10A. Accordingly, the positioning body 11 of the die 10 is oriented to the side opposite to the fixture 20A, thereby enabling the door outer panel 90 to be capable of leaning against the positioning body 11.

Subsequently, in the roller hemming system 20, the hand 21A of the vertical multi-articulated robot 21 releases the handle 10A and is extended toward and grasps the pressing member 19 located at the predetermined location. Concurrently, the operator leans the door outer panel 90, including the overlaid door inner panel 90A, against the positioning body 11 of the die 10, which is now leaning against the fixture 20A. At this moment, the operator positions the corners 91A, 91B, 91C, 91D and the trapezoidal groove 91E of the edge 91 of the door outer panel 90 so as to be placed along the metal inserts 12 of the die 10.

The vertical multi-articulated robot 21 grasping the pressing member 19 then moves and release the pressing member 19 over the die 10, which is leaned against the fixture 20A. Because the door outer panel 90 is leaning on the die 10, the pressing member 19 is positioned to press on both the door outer panel 90 and the door inner panel 90A overlaid on this door outer panel 90. As a result, the door outer panel 90 is set in the die 10 so that the roller hemming process can be performed.

Subsequently, in the roller hemming system 20, the vertical multi-articulated robot 23B on the carriage on track 23 is moved such that its roller 23A presses the edge 91 of the door outer panel 90. As a result, in the roller hemming system 20, the edge 91 of the door outer panel 90 and the edge of the door inner panel 90A are integrally formed by the roller hemming process. If the vertical multi-articulated robot 23B and the vertical multi-articulated robot 21 are anticipated to interfere with one another when moving the vertical multi-articulated robot 23B, the vertical multi-articulated robot 21 may be retracted before moving the vertical multi-articulated robot 23B, as shown in FIG. 15.

After completion of the roller 23A pressing the edge 91 of the door outer panel 90, the roller hemming system 20 moves the vertical multi-articulated robot 21 so that its hand 21A may grasp the pressing member 19. The pressing member 19 is then returned to its predetermined location. In this way, the door outer panel 90 is released from the state being set in the die 10 and can be freely removed from this die 10. The operator may then remove the door outer panel 90 integrally formed with the door inner panel 90A by the roller hemming process from the die 10.

The vertical multi-articulated robot 21, which has now returned the pressing member 19 to the predetermined location, may extend its hand 21A toward and grasp the die 10 leaned against the fixture 20A. Since the door outer panel 90 was already removed from the die 10, the vertical multi-articulated robot 21 can freely lift the grasping die 10.

The roller hemming system 20 then returns the positions and the postures of the carriage on track 23, the vertical multi-articulated robot 21, and the die 10 grasped by this vertical multi-articulated robot 21 to the state immediately after starting the roller hemming system 20. In response, the operator stops the roller hemming system 20. However, the operator may perform the roller hemming process on a plurality of the door outer panels 30 by repeating the above operations.

The surface hardness of portions of the above-described die 10 are higher due to the metal inserts 12 exposed from the surface of the application portions 11A. These application portions 11A correspond to areas where a greater force needs to be applied due to the deformation resistance of the edge 91 being locally higher. Here, the areas are those having a trimmed shape, specifically, for example, the parts of the corners 91A, 91B, 91C, 91D and the part defining the trapezoidal groove 91E. Therefore, local wear at the application portions 11A of the die 10 may be reduced, even when a relatively greater pressing force is applied than the force applied to the other edges 91 when the corresponding areas are being bent back. Therefore, it is possible to extend the life of die 10 by inhibiting uneven wear of the plastic positioning body 11 of the die 10. Further, since increasing the surface hardness of the positioning body 11 is adopted as a method for making the positioning body 11 of the die 10 harder to wear out, it is not necessary to reduce the frictional coefficient of the surface of this positioning body 11. Therefore, the potential displacement of the door outer panel 90 caused by slipping on the positioning body 11 can be reduced.

Further, the die 10 is arranged with the metal inserts 12 at the application portions 11A where a force is applied from the areas in which the door outer panel 90 is bent back with the metal inserts 12 embedded in these application portions 11A. Therefore, it is not necessary to arrange the metal inserts 12 at the portions where the force from the door outer panel 90 is not applied the weight of the die 10 can be reduced. Namely, the die 10 is constituted of a combination of metal and plastic, eliminating the metal parts from the areas to which the load is not forcefully applied, thereby reducing the weight of the die 10.

Further, the location of the metal inserts 12 in the positioning body 11 of the die 10 can be determined only based on the appearance of the door outer panel 90 (specifically, for example, the thickness of the edge 91 and the bent-back width 90D or the relative arrangement of the areas). Therefore, it is possible to facilitate developing a new die 10 when modifying the design of the door outer panel 90, for instance without necessitating repeated trial and error to determine the proper arrangement of the above metal inserts 12.

Further, the positioning body 11 of the die 10 can be made with the plastic blocks 11B, 11C, 11D, 11E having a relatively simple shape (specifically, for example, a rod shape). This is possible even though the embedded metal inserts 12 have a relatively complex shape. Therefore, when producing the positioning body 11 using a hard urethane resin, which is a plastic excellent in both wear resistance and toughness, a high level of technique is not necessary to prevent voids forming in casted products for hard urethane resins having a relatively complex shape.

Further, the above-described die 10 of the above-described roller hemming system 20 and the roller hemming process can be used with the door outer panel 90 while the door outer panel 90 is supported by a supporting means (specifically, for example, the jig 22) separate from this die 10. As a result, it is possible to reduce the weight of the die 10 itself and improve the handling performance of the die 10 without need of providing a structure for supporting the door outer panel 90 to this die 10. Therefore, the handling performance of the vertical multi-articulated robot 21, which controls the position and the posture of the die 10, is improved. Therefore, the roller hemming system 20 can achieve improved operability of arrangement changing work of the die 10 by moving this vertical multi-articulated robot 21.

The present disclosure is not limited to have the appearance and structure described in the above-described embodiment. Various modifications, additions, or eliminations are possible without departing from the scope of the present disclosure. For example, the following various embodiments may be carried out.

(1) The metal workpiece, which can be subjected to the roller hemming process according to the present disclosure, is not limited to a door outer panel having a bending line. More particularly, according to the present disclosure, the roller hemming process can be performed, for example, on the edge of the door outer panel without a bending line. For example, with regard to this case, the trapezoidal grooves in the edge of the door outer panel and the metal inserts provided in the positioning body of the die corresponding to this trapezoidal groove can be omitted. Further, according to the present disclosure, the roller hemming process can be performed, for example, on the edge of the disk-shaped metal workpiece without corners. In this case, since the edge of the metal workpiece does not need to have a trimmed shape, the metal inserts corresponding to the portions with this trimmed shape can be omitted.

(2) The roller hemming process carried out in the above-described embodiment is adopted to form the door outer panel integrally with the door inner panel by bending up the edge of the door outer panel to have a seam shape, further bending this edge back toward the edge of the door inner panel, and crushing this edge of the door outer panel toward the door inner panel. However, the roller hemming process according to the present disclosure is not limited to those steps described above. Specifically, the roller hemming process according to the present disclosure, for example, may have the flange formed in advance. This allows the door outer panel to beintegral with the door inner panel by bending back the seam formed at the edge of the door outer panel and crushing this edge toward the door inner panel. Further, the roller hemming process according to the present disclosure may be a hemming bent for reinforcing the edge of the metal workpiece by bending back and crushing the edge of the metal workpiece optionally formed in a plate-shape, without it interlocking with another member. Further, the roller hemming process according to the present disclosure may be an open hemming in which the edge of the metal workpiece optionally formed in a plate-shape is bent back without this edge being crushed.

(3) The metal inserts in the die of the present disclosure do not need to be fitted by a flat-inlay process, where the plastic blocks constituting the positioning body with these plastic blocks as base members. More specifically, the metal inserts may be fitted in these plastic blocks, for example, by a cut-and-fit inlay technique, in which the metal inserts are fitted in through holes formed in the plastic blocks constituting the base members. Further, the metal inserts may be fitted in these plastic blocks, for example, by a raised inlay technique, in which the metal inserts are fitted in the recesses formed in the plastic blocks constituting the base members such that they project from the surface of these plastic blocks. Further, the metal inserts may be fitted in this positioning body so as to be half-embedded by injecting plastic as a material of the positioning body around these metal inserts.

(4) In the roller hemming system of the present disclosure, the robot and the manipulator do not need to be a vertical multi-articulated robot. Specifically, a type of a robot or manipulator different than a vertical multi-articulated robot may be used, such as, for example, a horizontal multi-articulated robot as a part of the robot or manipulator.

## Claims

1. A die, in which a metal workpiece is set, such that a roller hemming process can be performed on an edge of the sheet-like metal workpiece in an area where a deformation resistance against bending back is locally enhanced, the roller hemming is a process in which the edge of the metal workpiece is pressed with a roller so as to be bent back, the die comprising:
a plastic positioning body configured to position the metal workpiece to be set in a predetermined posture by being abutted along the edge of the metal workpiece, wherein:
the positioning body includes a metal inset having a higher surface hardness than the plastic at an application portion where force is applied from the area when the area of the metal workpiece are bent back; and
the metal insert is in a half-embedded state in which one part of the metal insert is exposed from a surface of the application portion while the remaining portion is embedded inside the application portion.

2. The die according to claim 1, wherein:
the positioning body is configured to determine a position of the metal workpiece, the metal workpiece having a plate thickness of more than or equal to 0.5mm and less than or equal to 1mm at the edge; and
the application portion is configured to extend along the edge of the metal workpiece, the metal workpiece having a width of less than or equal to 7mm at a bent-back portion by roller hemming.

3. The die according to claim 1 or 2, wherein the positioning body is configured by assembling a plurality of plastic blocks, made of a hard urethane resin without voids, with the metal insert.

4. The die according to claim 1, 2 or 3, wherein:
the positioning body is configured to determine a position of the metal workpiece with a corner having a trimmed edge shape; and
the application portion is configured to be placed along a portion at the edge of the metal workpiece made to have a narrower bent-back width, due to being trimmed, after roller hemming.

5. The die according to claim 1, 2, 3 or 4, wherein:
the positioning body is configured to determine a position of the metal workpiece having a trapezoidal groove at the edge, the trapezoidal groove being in a shape where a part of the edge is notched; and
the application portion is configured to be placed along a portion of the edge of the metal workpiece during roller hemming, the portion having a narrower bent-back width due to the trapezoidal groove.

6. A hemming system for performing a roller hemming process, in which the roller hemming process is carried out on a sheet-like metal workpiece, the metal workpiece having an area at an edge where deformation resistance against bending back is locally increased, the bending back being performed by pressing and bending back the edge of the metal workpiece with a roller, the hemming system comprising:
a die in which a metal workpiece can be set, such that the roller hemming can be carried out;
a supporting means configured to support the metal workpiece in a state with the edge of this metal workpiece being freely accessible;
a robot having the roller, the robot being configured to control pressing the edge of the metal workpiece with the roller, wherein:
the die includes a plastic positioning body configured to position the metal workpiece to be set in a predetermined posture by being abutted to and along the edge of the metal workpiece;
the positioning body includes a metal inset having a higher surface hardness than the plastic at an application portion, where a force is applied from the area when the area of the metal workpiece is bent back;
the metal insert is half-embedded, in which some part of the metal insert is exposed from a surface of the application portion while the remaining part is embedded inside the application portion; and
the robot is configured to press the edge of the metal workpiece with the roller from a side opposite the positioning body, while the metal insert is set in the die and placed along the area.

7. The hemming system for performing the roller hemming process according to claim 6, further comprising a manipulator for controlling a position and a posture of the die, wherein:
the supporting means is configured to bring the metal workpiece into a lifted state by supporting the metal workpiece; and
the manipulator is configured to allow the positioning body of the die to cover the metal workpiece supported by the supporting means, such that the metal insert is positioned along the area of the metal workpiece, so that the metal workpiece is set in the die.

8. A method for performing a roller hemming process on a metal workpiece in which the roller hemming process is carried out on the sheet-like metal workpiece having an area at an edge where deformation resistance against bending back is locally increased, the roller hemming process being carried out by pressing and bending back the edge of the metal workpiece with a roller, the method comprising:
setting the metal workpiece in the die, the die including a plastic positioning body and a metal insert which is half-embedded into the positioning body such that some part of the metal insert is exposed from a surface of the positioning body while the remaining portion is embedded in the positioning body;
abutting the plastic positioning body along the edge of the metal workpiece to dictate a position of the metal workpiece in a predetermined posture;
placing the metal insert of the die along the area of the metal workpiece; and
pressing the edge of the metal workpiece with the roller from a side opposite the positioning body.

9. The method for performing a roller hemming process according to claim 8 on a metal workpiece, the method further comprising:
supporting the metal workpiece in a lifted state with a supporting means which is different from the die;
covering the metal workpiece with the die so that the metal workpiece is set in the die; and
placing the metal insert along the area of the metal workpiece.
